Europäisches Patentamt

European Patent Office

Office européen des brevets

(11) Veröffentlichungsnummer : **0 398 902 B1**

## (12) EUROPÄISCHE PATENTSCHRIFT

(45) Veröffentlichungstag der Patentschrift :
**13.05.92 Patentblatt 92/20**

(21) Anmeldenummer : **89901060.7**

(22) Anmeldetag : **08.12.88**

(86) Internationale Anmeldenummer :
**PCT/EP88/01121**

(87) Internationale Veröffentlichungsnummer :
**WO 89/06615 27.07.89 Gazette 89/16**

(51) Int. Cl.⁵ : **B60T 8/62, B60K 28/16**

(54) **ANTRIEBSSCHLUPFREGELSYSTEM.**

(30) Priorität : **19.01.88 DE 3801321**

(43) Veröffentlichungstag der Anmeldung :
**28.11.90 Patentblatt 90/48**

(45) Bekanntmachung des Hinweises auf die
Patenterteilung :
**13.05.92 Patentblatt 92/20**

(84) Benannte Vertragsstaaten :
**DE FR GB IT SE**

(56) Entgegenhaltungen :
**DE-A- 3 603 765**
**DE-C- 2 148 303**
**US-A- 4 154 487**

(73) Patentinhaber : **ROBERT BOSCH GMBH**
**Postfach 30 02 20**
**W-7000 Stuttgart 30 (DE)**

(72) Erfinder : **SIGL, Alfred**
**Waldeck 8**
**W-7126 Sersheim (DE)**
Erfinder : **MEISSNER, Manfred**
**Im Eichrain 22**
**W-7145 Unterriexingen (DE)**
Erfinder : **ISELLA, Thomas**
**Blumenstrasse 70**
**W-7145 Markgröningen (DE)**
Erfinder : **SCHMITT, Johannes**
**Posener Strasse 19**
**W-7141 Schwieberdingen (DE)**

(74) Vertreter : **Kammer, Arno, Dipl.-Ing. et al**
**ROBERT BOSCH GmbH Zentralabteilung**
**Patente Postfach 30 02 20**
**W-7000 Stuttgart 30 (DE)**

Jouve, 18, rue Saint-Denis, 75001 PARIS

**Beschreibung**

Die Erfindung betrifft ein Antriebsschlupfregelsystem mit den Merkmalen des Oberbegriffs des Anspruchs 1.

Stand der Technik

Es ist bekannt (DE-A1- 3331297), bei einem Antriebsschlupfregelsystem die Abweichung der Radgeschwindigkeit eines angetriebenen Rads von der Fahrzeuggeschwindigkeit zu bestimmen und bei Überschreiten einer Schwelle ein erstes Schwellwertsignal zu erzeugen. Zusätzlich wird auch noch die Radbeschleunigung ermittelt und bei Überschreiten einer Schwelle ein zweites Schwellwertsignal erzeugt. Diese Schwellwertsignale werden verknüpft und zur Beeinflussung des Bremsdrucks verwendet. Die Bremsdruckänderung kann dabei in Stufen (gepulst) erfolgen.

Vorteile der Erfindung

Das Antriebsschlupfregelsystem gemäß der Erfindung baut auf diesen Stand der Technik auf und optimiert die Druckvariation, sodaß ein komfortabler Regler zustande kommt.

Figurenbeschreibung

Anhand eines Ausführungsbeispiels soll die Erfindung näher erläutert werden.
Es zeigen
Fig. 1 eine Blockschaltbild einer Elektronik,
Fig. 2 die zugehörige Hydraulik.

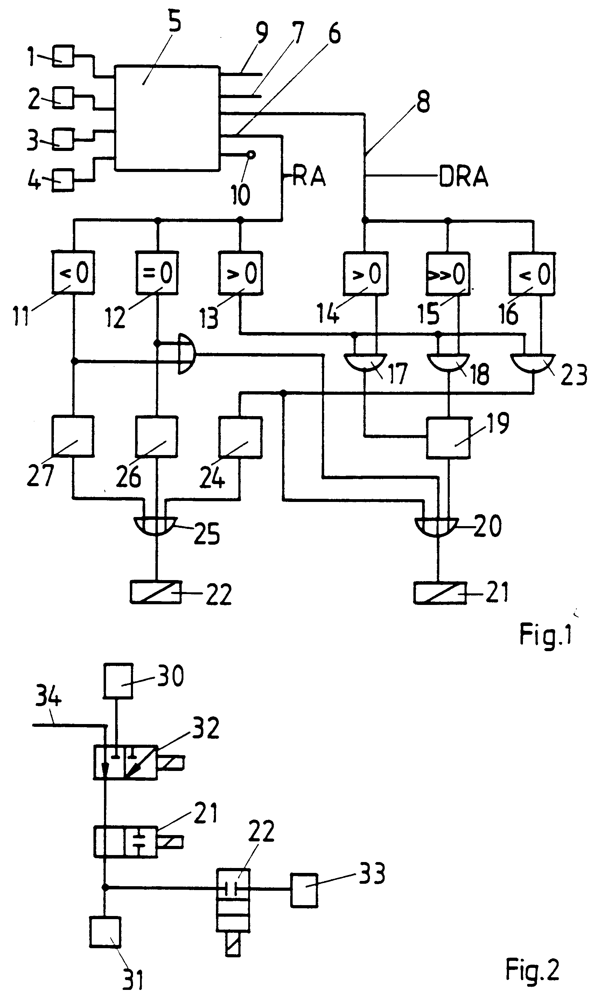

In Fig. 1 sind den angetriebenen Rädern zugeordnete Meßwertgeber für die Radgeschwindigkeit mit 1 und 2 bezeichnet, während die Meßwertgeber für die nicht angetriebenen Fahrzeugräder mit 3 und 4 bezeichnet sind. Diese Meßwertgeber 1 bis 4 sind mit einer Signalaufbereitung 5 verbunden, die aus den zugeführten Signalen für die einzelnen angetriebenen Räder die Abweichungen $RA_R$ und $RA_L$ der Radgeschwindigkeit von der Fahrzeuggeschwindigkeit sowie den Radbeschleunigungen entsprechende Signale $DRA_R$ und $DRA_L$ bildet. Die Signale $RA_R$ und $RA_L$ werden auf Leitungen 6 und 7, die den Beschleunigungen entsprechenden Signale auf Leitungen 8 und 9 abgegeben. Auf einer Leitung 10 erscheint ab Regelungsbeginn bis zum Abschluß eines Regelvorgangs ein Ausgangssignal.
Die Abweichungen können wie folgt gebildet werden

$$RA = [V_1 - (\frac{V_3 + V_4}{2} + \text{vorgegebene Schlupfschwelle})]$$

wobei $V_1$ die Radgeschwindigkeit des Meßwertgebers 1 usw. bedeutet.

Die vorgegebene Schlupfschwelle kann z.B. 2 km/h + 0,05 $\cdot\frac{V_3 + V_4}{2}$ betragen.

Die Signale DRA können durch Differentiation der entsprechenden Signale RA gewonnen werden.
In der weiteren Beschreibung wird der Einfachheit halber nur noch die Regelung an einem Rad betrachtet. Die Leitung 6 ist an drei Schwellwertstufen 11, 12 und 13 angeschaltet, die ein Ausgangssignal abgeben, wenn das Eingangssignal größer (13), gleich (12) bzw. kleiner (11) als 0 ist. Das Signal DRA wird ebenfalls drei Schwellwertstufen 14, 15 und 16 zugeführt, die Signale abgeben, wenn DRA größer als 0 ist (14), größer als eine vorgegebene positive Schwelle S (S >> 0) (15) bzw. kleiner als 0 ist (16).
Sobald die Schwellwertstufen 13 und 14 überschritten werden (RA > 0; DRA > 0), wird ein Und-Gatter 17 durchlässig, dessen Ausgangssignal einen Impulsgenerator 19 einschaltet. Dessen Ausgangssingal steuert über ein Oder-Gatter 20 ein Einlaßventil 21 an.
Dieses ist wie Fig. 2 zeigt zwischen eine Druckquelle 30 und die Radbremse 31 eingeschaltet. Stromauf ist noch ein Anschaltventil 32 eingeschaltet, das die Druckquelle 30 nur während der Regelung über Leitung 10 anschaltet. Weiter ist noch ein Auslaßventil 22 vorgesehen, über das Druck an der Bremse 31 zu einem Reservoir 33 abgelassen werden kann. Bei angeschalteten Druckquelle 30 kann mit den Ventilen 21 und 22 der Bremsdruck an der Bremse 31 variiert werden. Die Ventile 21 und 22 dienen auch der Antiblockierregelung. In diesem Falle wird der Druck über eine Leitung 34 zugeführt.
Das gepulste Ansteuern des Ventils 21 bewirkt bei angeschalteter Druckquelle 30 eine gepulste Erhöhung des Bremsdrucks, wobei der Gradient des Anstiegs durch das Impuls-Pause-Verhältnis des Impulsgenerators 19 bestimmt ist.

Wird die Schwelle des Schwellwertstufe 15 von dem Signal DRA zusätzlich überschritten, so wird auch ein Und-Gatter 18 durchlässig, dessen Ausgangssignal des Impuls-Pause-Verhältnis des Impulsgenerators im Sinne einer Erhöhung des Gradienten des Druckaufbau umschaltet.

Wird dann bei noch positiver Anweichung (RA > 0) das Signal DRA kleiner als 0, so wird ein Und-Gatter 23 durchlässig, dessen Ausgangssignal einen Impulsgenerator 24 einschaltet, dessen Impulse über ein Oder-Gatter 25 das Auslaßventil 22 ansteuern. Damit wird der Druck gepulst mit einem vorgegebenen Gradienten abgebaut. Erreicht die Abweichung RA den Wert 0, so wird unabhängig von DRA ein anderer Impulsgenerator 26 eingeschaltet, der ebenfalls aufgrund seines Impuls-Pauseverhältnisses langsam Druck abbaut. Wird die Abweichung negativ (RA < 0) so wird mittels eines weiteren Impulsgenerators 27 Druck schneller abgebaut. Die Eingangssignale der Impulsgeneratoren 24, 26 und 27 werden über Oder-Gatter 20 dem Einlaßventil 21 zugeführt, da in den Druckabbauphasen das Einlaßventil die Druckzufuhr sperren muß.

## Patentansprüche

1. Antriebsschlupfregelsystem, bei dem aus den gemessenen Geschwindigkeiten der angetriebenen und der nicht angetriebenen Räder die Abweichungen $RA_R$ und $RA_L$ der angetriebenen Räder von der Fahrzeuggeschwindigkeit und den Beschleunigungen der angetriebenen Fahrzeugräder entsprechende Signale $DRA_R$ und $DRA_L$ ermittelt werden und bei dem ab dem Erreichen von Schwellwerten durch die Abweichungen und die Beschleunigungen Schwellwertsignale erzeugt werden, die miteinander verknüpft zur Beeinflussung des Bremsdruck an den zugehörigen Rädern ausgenutzt werden wobei die Bremsdruckbeeinflussung wenigstens zeitweise in Stufen erfolgt, dadurch gekennzeichnet, daß Bremsdruck am zugehörigen Rad jeweils aufgebaut wird, wenn sowohl eine Abweichung ($RA_R$ oder $RA_L$) größer als ein nahe bei 0 liegender Wert oder 0 ist als auch das zugehörige der Beschleunigung entsprechende Signal ($DRA_R$ bzw. $DRA_L$) größer als ein nahe bei 0 liegender Wert oder 0 ist und daß sowohl bei einer unterhalb des ersten Werts oder 0 liegenden Abweichung als auch bei einer oberhalb des ersten Werts oder 0 liegenden Abweichung, jedoch eines unterhalb des zweiten Werts oder 0 liegenden der Radbeschleunigung entsprechenden Signals Druck abgebaut wird.

2. Antriebsschlupfregelsystem nach Anspruch 1, dadurch gekennzeichnet, daß der Druckaufbau mit größer werdendem der Radbeschleunigung entsprechendem Signal schneller gemacht wird.

3. Antriebsschlupfregelsystem nach Anspruch 2, dadurch gekennzeichnet, daß wenigstens eine weitere höher liegende Schwelle für das der Beschleunigung entsprechende Signal vorgesehen ist und daß der schnellere Druckaufbau durch Änderung des Puls-Pauseverhälnisses der gestuften Druckerhöhung erfolgt.

4. Antriebsschlupfregelsystem nach einem der Ansprüche 1 bis 3, dadurch. gekennzeichnet, daß bei einer Abweichung gleich dem ersten Wert oder 0 Druck langsam abgepulst wird.

5. Antriebsschlupfregelsystem nach einem der Ansprüche 1 bis 4, dadurch gekennzeichnet, daß das Abpulsen des Druckes abhängig von der Fahrzeuggeschwindigkeit in der Weise erfolgt, daß unterhalb eines Schwellwerts die Pausenzeit vergrößert oder die Pulszeit verkleinert wird.

6. Antriebsschlupfregelsystem nach einem der Ansprüche 1 bis 5, dadurch gekennzeichnet, daß bei der Signalkombination (RA > 0 und DRA > 0) das Puls- Pauseverhältnis nicht über Schwellen sondern direkt aus der Summe aus RA + DRA in der Art berechnet wird, daß die Pausenzeit bei größerer Summe kleiner und/oder die Pulszeit bei größerer Summe größer wird.

## Claims

1. Drive slip control system in which, from the measured speeds of the driven and non-driven wheels, the deviations $RA_R$ and $RA_L$ of the driven wheels from the vehicle velocity and the signals $DRA_R$ and $DRA_L$ corresponding to the accelerations of the driven wheels are determined and in which, as from the attainment of threshold values by the deviations and the accelerations, threshold value signals are generated which are used in combination to influence the brake pressure at the associated wheels, the influencing of the brake pressure taking place at least for a time in steps, characterised in that brake pressure is built up at the respective associated wheel when both a deviation ($RA_R$ or $RA_L$) is greater than a value near 0 or 0 and the associated signal corresponding to the acceleration ($DRA_R$ or $DRA_L$) is greater than a value near 0 or 0 and in that pressure is reduced both in the case of a deviation below the first value or 0 and in the case of a deviation above the first value or 0 but with a signal corresponding to the wheel acceleration below the second value or 0.

2. Drive slip control system according to Claim 1, characterIsed in that the pressure build-up is carried out more rapidly when the signal corresponding to the wheel acceleration is becoming greater.

3. Drive slip control system according to Claim 2, characterised in that at least one further, higher threshold

3

is provided for the signal corresponding to the acceleration and in that the more rapid build-up of pressure takes place by changing the pulse-pause ratio of the stepped increase in pressure.

4. Drive slip control system according to one of Claims 1 to 3, characterised in that pressure is pulsed down slowly in the case of a deviation equal to the first value or 0.

5. Drive slip control system according to one of Claims 1 to 4, characterised in that the pulsing down of the pressure as a function of the vehicle velocity takes place in such a way that the pause period is increased or the pulse period is reduced below a threshold value.

6. Drive slip control system according to one of Claims 1 to 5, characterised in that, in the case of the signal combination (RA > 0 and DRA > 0), the pulse-pause ratio is not calculated by means of thresholds but directly from the sum of RA + DRA in such a way that the pause period becomes smaller in the case of a larger sum and/or the pulse period becomes larger in the case of a larger sum.


**Revendications**

1. Système de régulation de glissement a l'entraînement selon lequel, à partir des vitesses mesurées des roues motrices et des roues non motrices, on détermine les différences $RA_R$ et $RA_L$ des roues motrices par rapport à la vitesse du véhicule ainsi que les signaux $DRA_R$ et $DRA_L$ correspondant aux accélérations des roues motrices du véhicule et, après avoir atteint les valeurs de seuil, on génère des signaux de valeurs de seuil par les différences et les accélérations, valeurs qui sont combinées entre-elles pour servir à influencer la pression de frein des roues correspondantes, cette action sur la pression de frein se faisant au moins de temps en temps par étapes, système caractérisé : en ce qu'on augmente la pression de frein de la roue correspondante lorsqu'il y a à la fois une différence ($RA_R$ ou $RA_L$) supérieure à une valeur voisine de 0 ou égale à 0 et que le signal d'accélération correspondant ($DRA_R$ ou $DRA_L$) est supérieur à une valeur proche de 0 ou égale à 0 et en ce qu'on diminue la pression à la fois pour une différence située en-dessous de la première valeur ou égale à 0 ainsi que pour une différence située au-dessus de la première valeur ou égale à 0, mais pour un signal correspondant à l'accélération de roue situé en-dessous de la seconde valeur ou égal à 0.

2. Système de régulation de glissement à l'entraînement selon la revendication 1, caractérisé en ce qu'on augmente la vitesse de la montée en pression en fonction de l'augmentation du signal correspondant à l'accélération de roue.

3. Système de régulation de glissement à l'entraînement selon la revendication 2, caractérisé en ce qu'il est prévu au moins un autre seuil situé plus haut pour le signal correspondant à l'accélération et en ce que la montée en pression plus rapide se fait en modifiant le rapport impulsion/pause de l'augmentation échelonnée de la pression.

4. Système de régulation de glissement à l'entraînement selon l'une des revendications 1 à 3, caractérisé en ce que, pour une différence égale à la première valeur ou égale à 0, on diminue lentement la pression, de manière impulsionnelle.

5. Système de régulation de glissement à l'entraînement selon l'une des revendications 1 à 4, caractérisé en ce que la commande impulsionnelle de la diminution de pression se fait en fonction de la vitesse du véhicule, en ce qu'en-dessous d'une valeur de seuil, on augmente la durée de la pause et on diminue la durée de l'impulsion.

6. Système de régulation de glissement à l'entraînement selon l'une des revendications 1 à 5, caractérisé en ce que, pour la combinaison de signal (RA > 0 et DRA > 0), on calcule le rapport impulsion/pause non par les seuils, mais directement à partir de la somme RA + DRA de façon que la durée de ta pause diminue lorsque la somme augmente et/ou que la durée de l'impulsion augmente lorsque la somme augmente.

Fig.1

Fig.2